# EUROPEAN PATENT APPLICATION

(11) **EP 4 636 939 A1**
(43) Date of publication of application: **22.10.2025**
(21) Application number: 23907829.8
(22) Date of filing: 21.12.2023
(51) Int. Cl.: H01M 50/533, H01M 50/178, H01M 50/586

(54) **BATTERY CELL**

(30) Priority: 22.12.2022 KR 20220181850; 03.05.2023 KR 20230057923
(71) Applicant: LG Energy Solution, Ltd., Seoul 07335 (KR)
(72) Inventor: NOH, Tae Heon, Daejeon 34122 (KR)
(74) Representative: Plasseraud IP
(86) International application number: PCT/KR2023/021325
(87) International publication number: WO 2024/136546

(57) **Abstract**

The present invention relates to a battery cell, and more particularly, to a battery cell, in which a protruding direction of a lead is changed to reduce a length of a battery module, a busbar is freely designed by utilizing a wider space than an existing space, a width of a tab is maximized to effectively achieve a current density and heat generation, and a welding area of the lead and the tab are enlarged rather than the existing welding area so that the lead and the tab are stably coupled.

A battery cell according to the present invention includes an electrode, an electrode tab disposed on each of both ends of the electrode in a first direction, and an electrode lead coupled to the electrode tab to extend in a second direction perpendicular to the first direction.

## Description

### TECHNICAL FIELD

### CROSS-REFERENCE TO RELATED APPLICATION

The present application claims the benefit of the priority of Korean Patent Application Nos. 10-2022-0181850, filed on December 22, 2022, and 10-2023-0057923, filed on May 03, 2022, which are hereby incorporated by reference in their entirety.

### TECHNICAL FIELD

The present invention relates a battery cell, and more particularly, to a battery cell including an electrode, a lead, and a tab.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries are receiving a lot of attention as an energy source in a variety of products such as mobile devices and electric vehicles. Particularly, secondary batteries are an excellent energy resource, which is capable of replacing the use of existing products using fossil fuels, and are attracting attention as an eco-friendly energy source because the secondary batteries do not generate by-products due to the energy use.

Secondary batteries have attracted considerable attention as power sources for electric vehicles (EVs), hybrid electric vehicles (HEVs), and plug-in hybrid electric vehicles (PHEVs), which have been developed to solve limitations, such as air pollution, caused by existing gasoline and diesel vehicles that use fossil fuels. In other words, the secondary batteries are used in the form of a battery pack including a plurality of battery modules.

In the secondary battery, a lead tab is a connection terminal for electrically connecting the positive and negative electrodes in the secondary battery to the outside. A plurality of battery cells are stacked to constitute a battery module, and a positive electrode tab connected to the positive electrode of the battery cell and a negative electrode tab connected to the negative electrode are connected to the lead.

In the related art, the lead in the battery cell has been designed to be horizontal to a longitudinal direction of the battery cell. Thus, an overall length became longer, and when the battery cells are disposed in a parallel structure and used, a problem in which the lead is bent occurs. In addition, the lead that protrudes in the longitudinal direction has to be connected to a busbar in the longitudinal direction of the module. However, there is a problem of being limited in design of the busbar with the structure according to the related art.

### DISCLOSURE OF THE INVENTION

### TECHNICAL PROBLEM

In order to solve the above problems, the present invention may reduce a length of a battery module by changing a protruding direction of a lead. In addition, a busbar may be freely designed by utilizing a wider space than the existing space. In addition, an object of the present invention is to provide a battery cell in which a width of a tab is maximized to effectively achieve a current density and heat generation, and a welding area of the lead and the tab are enlarged rather than the existing welding area so that the lead and the tab are stably coupled.

### TECHNICAL SOLUTION

A battery cell according to an embodiment of the present invention may include an electrode, an electrode tab disposed on each of both ends of the electrode in a first direction, and an electrode lead coupled to the electrode tab to extend in a second direction perpendicular to the first direction.

The electrode tab may include a positive electrode tab disposed on one end of the electrode, and a negative electrode tab disposed on the other end of the electrode, wherein, with respect to the second direction, each of the positive electrode tab and the negative electrode tab may have the same length as the electrode.

A length of each of the positive electrode tab and the negative electrode tab in the second direction may be greater than a length of each of the positive electrode tab and the negative electrode tab in the first direction.

The electrode lead may include a first lead disposed on one end of the electrode, and a second lead disposed on the other end of the electrode, wherein the first lead and the second lead may extend in the same direction in the second direction.

A length of each of the first lead and the second lead in the second direction may be greater than the length of each of the first lead and the second lead in the first direction.

The first lead may include a first coupling part coupled to the positive electrode tab, the second lead may include a second coupling part coupled to the negative electrode tab, and with respect to the second direction, a length of the first coupling part and a length of the second coupling part may be the same as a length of each of the positive electrode tab and the negative electrode tab.

The battery cell may further include a battery case configured to accommodate the electrode and the electrode tab, wherein the first lead and the second lead may protrude from the battery case in the second direction.

The first lead and the second lead may protrude in the same direction from the battery case in the second direction.

Lengths of the first lead and the second lead, which protrude from the battery case, may be the same.

With respect to the second direction, edges of one side of the electrode lead and the electrode tab may be disposed to correspond to each other.

### ADVANTAGEOUS EFFECTS

According to the embodiment of the present invention, the protruding direction of the lead may be changed to reduce the length of the battery module, the busbar may be freely designed by utilizing the wider space than the existing space, the width of the tab may be maximized to effectively achieve the current density and heat generation, and the welding area of the lead and the tab may be enlarged rather than the existing welding area so that the lead and the tab are stably coupled.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a front view of a battery cell according to Embodiment 1 of the present invention.
FIG. 2 is an enlarged view illustrating a positive electrode tab and a first lead of the battery cell according to Embodiment 1 of the present invention.
FIG. 3 is an enlarged view illustrating a negative electrode tab and a second lead of the battery cell according to Embodiment 1 of the present invention.
FIG. 4 is a front view illustrating an electrode and an electrode tab of the battery cell according to Embodiment 1 of the present invention.
FIG. 5 is a view illustrating a lead of the battery cell according to Embodiment 1 of the present invention.
FIG. 6 is a front view illustrating a state in which the first lead and the second lead are disposed in opposite directions in the battery cell according to Embodiment 1 of the present invention.
FIG. 7 is a front view of a battery cell according to Embodiment 2 of the present invention.
FIG. 8 is a front view illustrating a state in which a first lead and a second lead are disposed in opposite directions in the battery cell according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

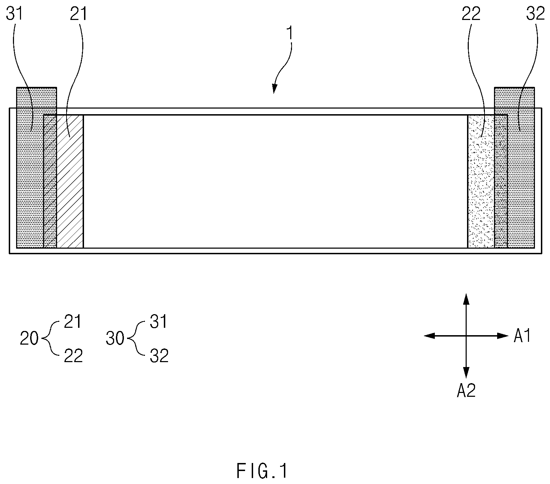

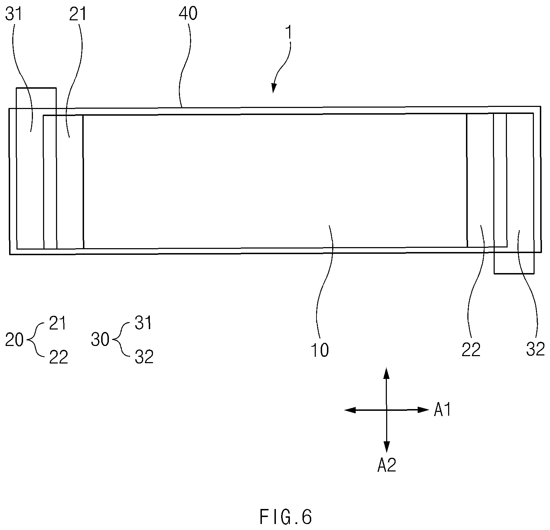

Hereinafter, Embodiment 1 of the present invention will be described in detail with reference to FIGS. 1 and 6.

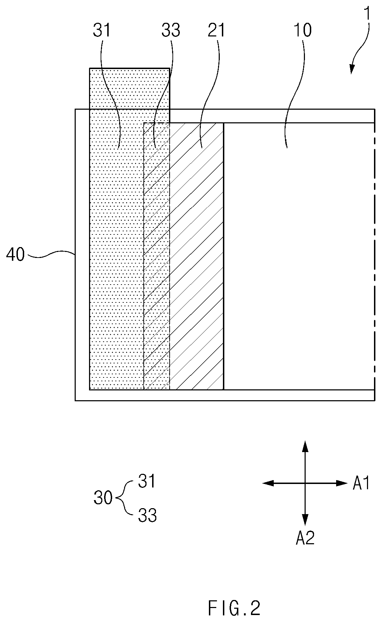

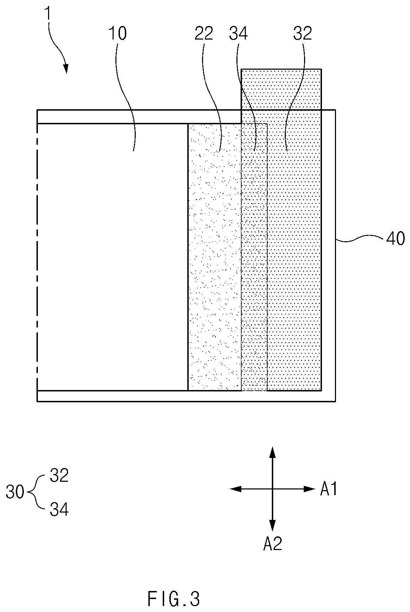

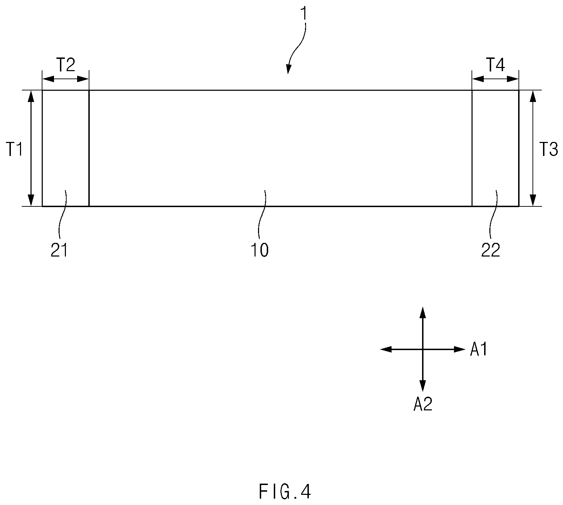

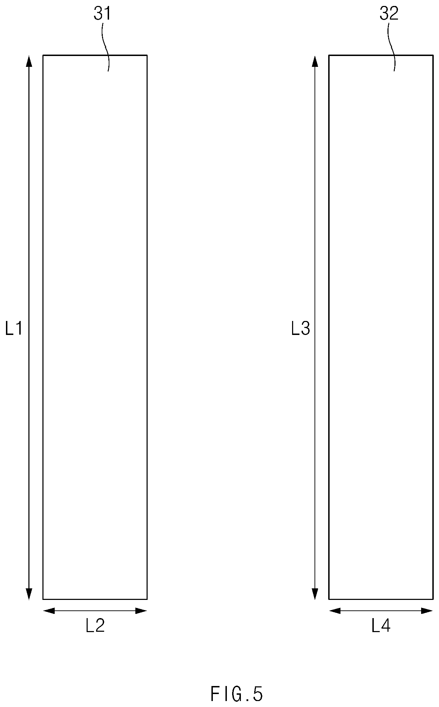

FIG. 1 is a front view of a battery cell according to Embodiment 1 of the present invention, FIG. 2 is an enlarged view illustrating a positive electrode tab and a first lead of the battery cell according to Embodiment 1 of the present invention, FIG. 3 is an enlarged view illustrating a negative electrode tab and a second lead of the battery cell according to Embodiment 1 of the present invention, FIG. 4 is a front view illustrating an electrode and an electrode tab of the battery cell according to Embodiment 1 of the present invention, FIG. 5 is a view illustrating a lead of the battery cell according to Embodiment 1 of the present invention, and FIG. 6 is a front view illustrating a state in which the first lead and the second lead are disposed in opposite directions in the battery cell according to Embodiment 1 of the present invention.

Referring to FIGS. 1 to 6, a battery cell 1 according to Embodiment 1 of the present invention includes an electrode 10, an electrode tab 20, and an electrode lead 30. The battery cell 1 according to Embodiment 1 of the present invention may be a pouch-type cell.

The electrode 10 may extend in a first direction A1. A second direction A2 is a direction perpendicular to the first direction A1. Since the electrode 10 extends in the first direction A1, a length of the electrode 10 in the first direction A1 may be greater than a length of the electrode 10 in the second direction A2.

The electrode tab 20 may be disposed at each of both ends of the electrode 10 in the first direction A1. The electrode tab 20 may include a positive electrode tab 21 and a negative electrode tab 22. The electrode tab 20 serves to connect the electrode 10 to an external circuit. The electrode tab 20 may be made of a metal.

The positive electrode tab 21 may be disposed on one end of the electrode 10. The positive electrode tab 21 may be connected to a positive electrode of the electrode 10. The positive electrode tab 21 may be provided so that a length T1 in the second direction A2 is greater than a length T2 in the first direction A1.

The negative electrode tab 22 may be disposed on the other end of the electrode 10. The negative electrode tab 22 may be connected to a negative electrode of the electrode 10. The negative electrode tab 22 may be provided so that a length T4 in the second direction A2 is greater than a length T3 in the first direction A1.

With respect to the second direction A2, each of a length of the positive electrode tab 21 and a length of the negative electrode tab 22 may be the same as the length of the electrode 10. Since each of the length of the positive electrode tab 21 and the length of the negative electrode tab 22 in the second direction A2 is the same as that of the electrode 10, a separate cutting process may not be required in a process of forming the positive electrode tab 21 and the negative electrode tab 22. Since there is no process of cutting the electrode tab 20, a risk of the positive electrode tab 21 and the negative electrode tab 22 being torn may be reduced to realize structural stable. There is an advantage in that heat generation to the electrode tab 20 is dispersed by maximizing the length of the positive electrode tab 21 and the length of the negative electrode tab 22 in the second direction A2.

The electrode lead 30 may be coupled to the electrode tab 20. The electrode lead 30 may be coupled to a plurality of electrode tabs 20. The electrode lead 30 may extend in the second direction A2 perpendicular to the first direction A1. The electrode lead 30 may include a first lead 31 and a second lead 32. One edge of the electrode lead 30 and one edge of the electrode tab 20 may be disposed to correspond to each other in the second direction A2. The electrode lead 30 may connect the electrode 10 and an external circuit. The electrode lead 30 may transmit current and voltage signals, which are necessary to control the electrode 10, to the external circuit.

The first lead 31 may be disposed on one end of the electrode 10. In the first lead 31, a length L1 in the second direction A2 may be greater than a length L2 in the first direction A1.

The first lead 31 may include a first coupling part 33 coupled to the positive electrode tab 21. The first lead 31 may be welded to the positive electrode tab 21 through the first coupling part 33. As an area of the first coupling part 33 increases, coupling force with the positive electrode tab 21 may increase. When the electrode 10 is provided in plurality, the positive electrode tab 21 may also be provided in plurality, and thus, the plurality of positive electrode tabs 21 may be connected to the first lead 31.

The second lead 32 may be disposed on the other end of the electrode 10. In the second lead 32, a length L3 in the second direction A2 may be greater than a length L4 in the first direction A1.

The second lead 32 may include a second coupling part 34 coupled to the negative electrode tab 22. The second lead 32 may be welded to the negative electrode tab 22 through the second coupling part 34. As an area of the second coupling part 34 increases, coupling force with the negative electrode tab 22 may increase. When the electrode 10 is provided in plurality, the negative electrode tab 22 may also be provided in plurality, and thus, the plurality of negative electrode tabs 22 may be connected to the second lead 32.

The first coupling part 33 and the second coupling part 34 may have the same length as the positive electrode tab 21 and the negative electrode tab 22 in the second direction A2. Thus, the first lead 31 and the second lead 32 may be provided to be longer than the positive electrode tab 21 and the negative electrode tab 22 in the second direction A2.

The battery cell 1 according to Embodiment 1 of the present invention may further include a battery case 40. The battery case 40 may accommodate the electrode 10 and the electrode tab 20. The first lead 31 and the second lead 32 may protrude from the battery case 40. The battery case 40 may protect the electrode 10, electrode tab 20, and the lead 30 from external environments. The battery case 40 may be made of a pouch material.

The first lead 31 and the second lead 32 may protrude in the same direction in the second direction A2. The first lead 31 and the second lead 32 may have the same length protruding from the battery case 40. The first lead 31 may be coupled to the positive electrode tab 21 by welding. The second lead 32 may be coupled to the negative electrode tab 22 by welding.

The first lead 31 and the second lead 32 may be disposed to protrude in the same direction with respect to the second direction A2, but may not be limited thereto and may be disposed to protrude in opposite directions as illustrated in FIG. 6.

In the battery cell 1 according to Embodiment 1 of the present invention, the first lead 31 and the second lead 32 may protrude in the second direction A2, and the lengths T1 and T3 of the positive electrode tab 21 and the negative electrode tab 22 in the second direction A2 may be the same as the length of the electrode 10. Since the first lead 31 and the second lead 32 protrude in the second direction A2, the welding area between the electrode tab 20 and the electrode lead 30 may be maximized. In addition, a busbar connected to the electrode lead 30 may be designed to be disposed in the second direction A2 of the battery cell. In addition, there is an effect of dispersing heat by maximizing sizes of the electrode lead 30 and the electrode tab 20.

Since the busbar connected to the electrode lead 30 is designed toward an upper side of the battery cell rather than a side surface of the battery cell, the busbar may be freely designed by utilizing a wider space. Unlike the existing battery cell structure, since the electrode lead 30 protrudes toward the second direction A2 of the battery cell 1, even if the battery cell 1 is applied to a module in a parallel structure, a bending of the electrode tab 20 may not occur. In addition, since the electrode lead 30 protrudes in the second direction A2 of the battery cell 1, a length of the entire battery module may be reduced.

In the related art, an end plate has been required on the side surface of the battery module. However, in the battery cell 1 according to Embodiment 1 of the present invention, since the electrode lead 30 is designed to be disposed on an upper or lower portion of the battery module rather than on the side surface, the end plate may not be required on the side surface of the battery module, and thus, there may be an effect of reducing costs by designing the battery module without the end plate.

### Embodiment 2

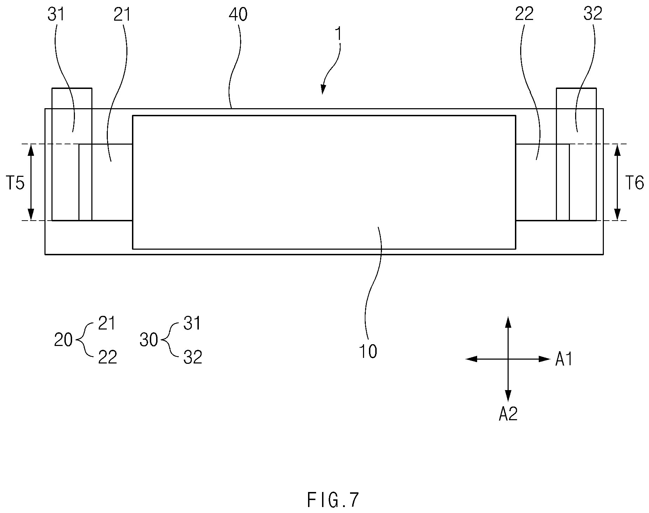

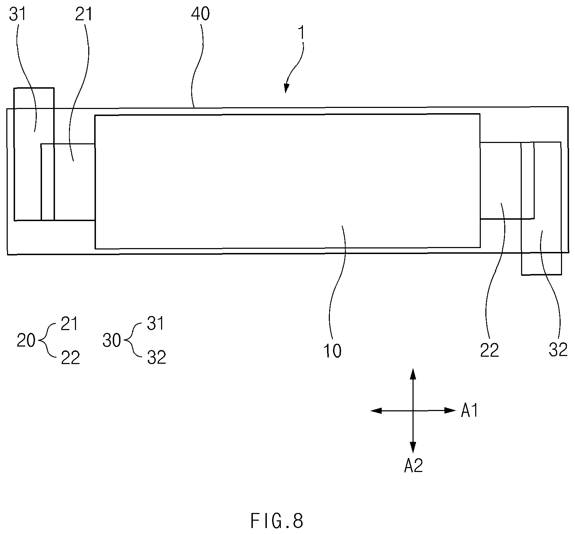

Hereinafter, a battery cell 1 according to Embodiment 2 of the present invention will be described in detail with reference to FIGS. 7 and 8.

FIG. 7 is a front view of a battery cell according to Embodiment 2 of the present invention, and FIG. 8 is a front view illustrating a state in which a first lead and a second lead are disposed in opposite directions in the battery cell according to Embodiment 2 of the present invention.

In the battery cell 1 according to Embodiment 2 of the present invention, a shape of an electrode tab 20 is different from the shape of the electrode tab 20 of the battery cell 1 according to Embodiment 1 of the present invention. The contents that are duplicated with Embodiment 1 will be omitted as much as possible, and Embodiment 2 will be described with a focus on the differences.

Referring to FIGS. 7 and 8, in a second direction A2, a length T5 of a positive electrode tab 21 is less than a length of an electrode 10. A length T6 of a negative electrode tab 22 is also less than the length of the electrode 10. The length T5 of the positive electrode tab 21 may be the same as a length T6 of the negative electrode tab 22.

The first lead 31 and the second lead 32 may be disposed in a second direction A2. The first lead 31 and the second lead 32 may be disposed in the same direction with respect to the second direction A2 or may be provided to protrude in opposite directions.

The battery cell 1 according to Embodiment 2 of the present invention may be a pouch-type cell.

The battery cell 1 according to Embodiment 2 of the present invention may have the same effect as the battery cell 1 according to Embodiment 1. When compared to the battery cell 1 according to Embodiment 1, the electrode tab 20 is designed to further protrude in the first direction A1, and the length of the electrode tab 20 in the second direction A2 is less than that of the electrode 10, but the first lead 31 and the second lead 32 extend in the second direction A2. Therefore, as in Embodiment 1, the busbar may be freely designed, and unlike the existing battery cell, the bending phenomenon of the electrode tabs 20 may not occur to reduce the length of the entire battery module.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

| | | | |
|---|---|---|---|
| 1: | Battery cell | 10: | Electrode |
| 20: | Electrode tab | 21: | Positive electrode tab |
| 22: | Negative electrode tab | 30: | Electrode lead |
| 31: | First lead | 32: | Second lead |
| 33: | First coupling part | 34: | Second coupling part |
| 40: | Battery case | A1: | First direction |
| A2: | Second direction | | |

## Claims

1. A battery cell comprising:
an electrode;
an electrode tab disposed on each of both ends of the electrode in a first direction; and
an electrode lead coupled to the electrode tab to extend in a second direction perpendicular to the first direction.

2. The battery cell of claim 1, wherein the electrode tab comprises:
a positive electrode tab disposed on one end of the electrode; and
a negative electrode tab disposed on the other end of the electrode,
wherein, with respect to the second direction, each of the positive electrode tab and the negative electrode tab has the same length as the electrode.

3. The battery cell of claim 2, wherein a length of each of the positive electrode tab and the negative electrode tab in the second direction is greater than a length of each of the positive electrode tab and the negative electrode tab in the first direction.

4. The battery cell of claim 1, wherein the electrode lead comprises:
a first lead disposed on one end of the electrode; and
a second lead disposed on the other end of the electrode,
wherein the first lead and the second lead extend in the same direction in the second direction.

5. The battery cell of claim 4, wherein a length of each of the first lead and the second lead in the second direction is greater than the length of each of the first lead and the second lead in the first direction.

6. The battery cell of claim 4, wherein the first lead comprises a first coupling part coupled to the positive electrode tab,
the second lead comprises a second coupling part coupled to the negative electrode tab, and
with respect to the second direction, a length of the first coupling part and a length of the second coupling part are the same as a length of each of the positive electrode tab and the negative electrode tab.

7. The battery cell of claim 4, further comprising a battery case configured to accommodate the electrode and the electrode tab,
wherein the first lead and the second lead protrude from the battery case in the second direction.

8. The battery cell of claim 7, wherein the first lead and the second lead protrude in the same direction from the battery case in the second direction.

9. The battery cell of claim 7, wherein lengths of the first lead and the second lead, which protrude from the battery case, are the same.

10. The battery cell of claim 1, wherein, with respect to the second direction, edges of one side of the electrode lead and the electrode tab are disposed to correspond to each other.
